# EUROPEAN PATENT SPECIFICATION

(11) **EP 3 876 624 B1**
(45) Date of publication and mention of the grant of the patent: **25.06.2025**
(21) Application number: 18938894.5
(22) Date of filing: 31.10.2018
(51) Int. Cl.: H04W 72/04, H04W 16/28, H04W 72/12, H04L 5/00

(54) **USER TERMINAL AND WIRELESS COMMUNICATIONS METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(43) Date of publication of application: 08.09.2021
(73) Proprietor: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/040605
(87) International publication number: WO 2020/090059

(56) References cited:
- ZTE: "Maintenance for Reference signals and QCL", vol. RAN WG1, no. Gothenburg, Sweden; 20180820 - 20180824, 11 August 2018 (2018-08-11), XP051515582, Retrieved from the Internet <URL:http://www.3gpp.org/ftp/tsg%5Fran/WG1%5FRL1/TSGR1%5F94/Docs/R1%2D1808197%2Ezip> [retrieved on 20180811]
- QUALCOMM INCORPORATED: "Remaining Details on QCL", vol. RAN WG1, no. Busan, Korea; 20180521 - 20180525, 20 May 2018 (2018-05-20), XP051442590, Retrieved from the Internet <URL:http://www.3gpp.org/ftp/Meetings%5F3GPP%5FSYNC/RAN1/Docs/> [retrieved on 20180520]
- INTEL CORPORATION: "Discussion on multi-TRP/multi- panel transmission", 3GPP TSG RAN WG1 #94BIS R1-1810790, 29 September 2018 (2018-09-29), pages 8, 9, XP051518195
- CHTTL: "Discussion on Multi-TRP/Panel transmission enhancements", 3GPP TSG RAN WG1 #94BIS R1-1810815, 28 September 2018 (2018-09-28), XP051518220

## Description

### Technical Field

The present disclosure relates to a user terminal and a radio communication method in a next-generation mobile communication system.

### Background Art

In the UMTS (Universal Mobile Telecommunications System) network, the specifications of long term evolution (LTE) have been drafted for the purpose of achieving higher data rates, lower delays, and so on (see Non Patent Literature 1). In addition, LTE-Advanced (Third Generation Partnership Project (3GPP) Rel. (Release) 10-14) has been specified for the purpose of achieving higher capacity and advancement of LTE (3GPP Rel. 8, 9).

Successor systems to LTE (for example, also referred to as 5th generation mobile communication system (5G), 5G+ (plus), new radio (NR), or 3GPP Rel. 15 or later) are also being studied.

Non Patent Literature 2 describes reference signals and QCL and proposes that when the time offset between the reception of the DL DCI and the corresponding PDSCH is smaller than a threshold, UE obtains QCL parameter from the CORESET with the lowest CORESET-ID which are associated with at least one search space set monitored by UE in the latest slot in the case that the PDSCH and the CORESET are in the same serving cell.

Non Patent Literature 3 describes details on QCI.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non Patent Literature 2: ZTE, "Maintenance for Reference signals and QCL"; 3GPP Draft; R1-1808197; and
Non Patent Literature 3: Qualcomm incorporated, "Remaining Details on QCL"; 3GPP Draft; R1-1807398.

### Summary of Invention

### Technical Problem

In future radio communication systems (e.g., NR), studies are underway to allow a user terminal (UE: User Equipment) to control, based on information about a quasi-co-location (QCL) of at least one of a signal and a channel (expressed as a signal/channel), reception processing (e.g., demapping, demodulation, decoding, reception beam formation, etc.) and transmission processing (e.g., mapping, modulation, coding, precoding, Tx beam formation, etc.) of the signal/channel.

In addition, in NR, studies are underway to allow one or more transmission/reception points (TRPs) (multi-TRP) to perform DL transmission (for example, PDSCH transmission) to the UE using one or more panels (multi-panel).

However, since the multi-panel/TRP is not considered in the NR specifications so far, the QCL assumption when the multi-panel/TRP is used cannot be appropriately controlled. Therefore, if the current NR specifications are followed, spatial diversity gain, high-rank transmission, etc. when using multi-panel/TRP cannot be suitably realized, and an increase in communication throughput may be suppressed.

Therefore, one of the purposes of the present disclosure is to provide a user terminal and a radio communication method capable of preferably performing DL communication even when a multi-panel/TRP is used.

### Solution to Problem

This object is accomplished by the subject-matter of the independent claims. The dependent claims concern particular embodiments.

### Advantageous Effects of Invention

According to one aspect of the present disclosure, DL communication can be preferably performed even when a multi-panel/TRP is used.

### Brief Description of Drawings

Fig. 1 is a diagram showing an example of QCL assumption of a DMRS port of PDSCH.
Figs. 2A to 2D are diagrams showing an example of a multi-panel/TRP scenario.
Fig. 3 is a diagram showing problems of QCL assumption of a DMRS port of PDSCH when multi-panel/TRP is used.
Figs. 4A and 4B are diagrams showing an example of QCL assumption of the DMRS port of PDSCH in a first embodiment.
Figs. 5A and 5B are diagrams showing an example of QCL assumption of the DMRS port of PDSCH in a variation of the first embodiment.
Figs. 6A and 6B are diagrams showing an example of QCL assumption of the DMRS port of PDSCH in a second embodiment.
Figs. 7A and 7B are diagrams showing an example of QCL assumption of the DMRS port of PDSCH in a variation of the second embodiment.
Fig. 8 is a diagram illustrating an example of a schematic configuration of a radio communication system according to an embodiment.
Fig. 9 is a diagram illustrating an example of a configuration of a base station according to an embodiment.
Fig. 10 is a diagram illustrating an example of a configuration of a user terminal according to an embodiment.
Fig. 11 is a diagram showing an example of a hardware configuration of the base station and the user terminal according to an embodiment.

### Description of Embodiments

### (QCL/TCI)

In NR, studies are underway to control reception processing (for example, at least one of reception, demapping, demodulation, and decoding) of at least one of a signal and a channel (expressed as a signal/channel) based on a transmission configuration indication state (TCI-state).

Here, the TCI-state is information regarding quasi-co-location (QCL) of a signal/channel, and may also be referred to as a spatial Rx parameter, spatial relation info, or the like. The TCI-state may be configured in UE for each channel or each signal.

QCL is an index indicating a statistical property of a signal/channel. For example, it may mean that if one signal/channel has a QCL relationship with another signal/channel, it can be assumed that these different signals/channels are the same in at least one of a doppler shift, a doppler spread, an average delay, a delay spread, and a spatial parameter (e.g., a spatial Rx parameter) (are QCL in at least one of these).

Note that, the spatial Rx parameter may correspond to a reception beam of the UE (e.g., a reception analog beam), and the beam may be identified based on spatial QCL. QCL (or at least one element of QCL) in the present disclosure may be replaced with spatial QCL (sQCL).

A plurality of types of QCL (QCL types) may be defined. For example, four QCL types A to D with different parameters (or parameter sets) that can be assumed to be identical may be provided. These parameters are as follows:
- QCL type A: Doppler shift, doppler spread, average delay, and delay spread;
- QCL Type B: Doppler shift and doppler spread;
- QCL type C: Doppler shift and average delay; and
- QCL type D: spatial Rx parameter.

Note that it may be referred to as QCL assumption for UE to assume that a certain CORESET, channel, or reference signal has a specific QCL (for example, QCL type D) relation with another CORESET, channel, or reference signal.

UE may determine, based on a TCI-state of a signal/channel or QCL assumption, at least one of a transmission beam (Tx beam) and a reception beam (Rx beam) of the signal/channel.

The TCI-state may be, for example, information regarding QCL of a target channel (or a reference signal (RS) for the channel) and another signal (for example, another downlink reference signal (DL-RS). The TCI-state may be configured (specified) by higher layer signaling, physical layer signaling, or a combination thereof.

In the present disclosure, the higher layer signaling may be, for example, any of Radio Resource Control (RRC) signaling, Medium Access Control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), a minimum system information (Remaining Minimum System Information (RMSI)), other system information (OSI), or the like.

The physical layer signaling may be, for example, downlink control information (DCI).

A channel for which a TCI-state is configured (specified) may be, for example, at least one of a physical downlink shared channel (PDSCH), a physical downlink control channel (PDCCH), a physical uplink shared channel (PUSCH), and a physical uplink control channel (PUCCH).

Further, RS having a QCL relation with the channel may be, for example, at least one of a synchronization signal block (SSB), a channel state information reference signal (CSI-RS), and a sounding reference signal (SRS).

SSB is a signal block including at least one of a primary synchronization signal (PSS), a secondary synchronization signal (SSS), and a physical broadcast channel (PBCH). SSB may be referred to as an SS/PBCH block.

An information element in a TCI-state configured by higher layer signaling ("TCI-state IE" of RRC) may include one or more pieces of QCL information ("QCL-Info"). The QCL information may include at least one of information regarding DL-RS having a QCL relation (DL-RS related information) and information indicating a QCL type (QCL type information). The DL-RS related information may include information such as an index of DL-RS (for example, an SSB index or a non-zero power CSI-RS resource ID), an index of a cell where RS is located, or an index of a bandwidth part (BWP) where RS is located.

### <TCI state for PDCCH>

The information regarding PDCCH (or DMRS antenna port associated with PDCCH) and QCL with a certain DL-RS may be referred to as the TCI state for PDCCH or the like.

UE may determine a TCI-state for UE-specific PDCCH (CORESET) based on higher layer signaling.

In the present disclosure, the higher layer signaling may be, for example, any of Radio Resource Control (RRC) signaling, Medium Access Control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

For example, for UE, one or more (K) TCI-states may be configured by RRC signaling (ControlResourceSet information element) for each CORESET. Further, UE may activate one or more TCI-states for each CORESET using MAC CE. The MAC CE may be referred to as a TCI-state indication for UE-specific PDCCH MAC CE. The UE may monitor the CORESET based on the active TCI state corresponding to the CORESET.

### <TCI state for PDSCH>

Information regarding PDSCH (or DMRS antenna port associated with PDSCH) and QCL with a certain DL-RS may be referred to as a TCI-state for PDSCH or the like.

For UE, M (M ≥ 1) TCI-states for PDSCH (M pieces of QCL information for PDSCH) may be notified (configured) by higher layer signaling. Note that the number M of TCI-states configured in UE may be limited by at least one of UE capability and a QCL type.

The downlink control information (DCI) used for scheduling of a PDSCH may include a certain field indicating the TCI state for the PDSCH (e.g., it may be called a TCI field, TCI state field, etc.). The DCI may be used for scheduling of a PDSCH of one cell, and may be referred to as, for example, DL DCI, DL assignment, DCI format 1_0, or DCI format 1_1.

Whether or not the TCI field is included in the DCI may be controlled by information notified from a base station to the UE. The information may be information (TCI-PresentInDCI) indicating whether the TCI field is present or absent in the DCI. The information may be configured in the UE by, for example, higher layer signaling.

When the DCI includes an x-bit (e.g., x = 3) TCI field, the base station may preliminarily configure, in the UE, up to 2^{x} (e.g., eight when x = 3) types of TCI states using the higher layer signaling. A value of the TCI field in the DCI (TCI field value) may indicate one of the TCI-states preliminarily configured by higher layer signaling.

When more than eight types of TCI states are configured in the UE, MAC CE may be used to activate (or specify) eight or less types of TCI states. The MAC CE may be referred to as a TCI states activation/deactivation for UE-specific PDSCH MAC CE. A value of the TCI field in the DCI may indicate one of the TCI states activated by MAC CE.

The MAC CE is used to specify a TCI state to be mapped to a code point of the TCI field of the DCI among TCI state IDs configured by RRC signaling, and to activate the TCI state. The activated TCI state may be mapped in ascending or descending order of the TCI state IDs to the code point values zero to 2^{x} - 1 (e.g., seven when x = 3) of the TCI field mentioned above.

When n is set to a slot for the UE to transmit hybrid automatic repeat request acknowledgement (HARQ-ACK) for the PDSCH that has provided the MAC CE, the activation/deactivation based on the MAC CE (mapping of TCI fields and TCI states in the DCI) may be applied from slot n + 3* (the number of slots in a subframe) + 1. That is, in the slot n + 3*(the number of slots in a subframe) + 1, update of the code point of the TCI field based on the MAC CE may be effective.

If the time offset between the reception of the DL DCI and the reception of the PDSCH corresponding to the DCI is greater than or equal to a certain threshold value, the UE may assume that the DM-RS ports of PDSCH of a serving cell are quasi co-located with the RS(s) in the TCI state with respect to the QCL type parameter(s) given by the indicated TCI state specified by the DCI.

The time offset between the reception of the DL DCI and the reception of the PDSCH corresponding to the DCI may be referred to as a scheduling offset.

Further, the above-mentioned certain threshold value may be referred to as "threshold", "threshold for offset between a DCI indicating a TCI state and a PDSCH scheduled by the DCI", "threshold-Sched-Offset", schedule offset threshold value, scheduling offset threshold value, and the like.

The scheduling offset threshold value may be based on the UE capability, and may be based on, for example, the delay caused by decoding the PDCCH and beam switching. The information of the scheduling offset threshold value may be configured from the base station using higher layer signaling, or may be transmitted from the UE to the base station.

In addition, if the scheduling offset is less than the scheduling offset threshold value, the UE may assume that the DM-RS ports of PDSCH of a serving cell are quasi co-located with the RS(s) in the TCI state with respect to the QCL parameter(s) used for PDCCH quasi co-location indication of the lowest CORESET-ID in the latest slot in which one or more control resource sets (CORESETs) within the active BWP (Bandwidth Part) of the serving cell are configured or the UE.

For example, the UE may assume that the DMRS ports of the PDSCH are quasi co-located with the DL-RS based on the TCI state activated for the CORESET corresponding to the lowest CORESET-ID. The latest slot may be, for example, a slot that receives the DCI that schedules the

### PDSCH.

Note that the CORESET-ID may be an ID (ID for identifying CORESET) configured by the RRC information element "ControlResourceSet".

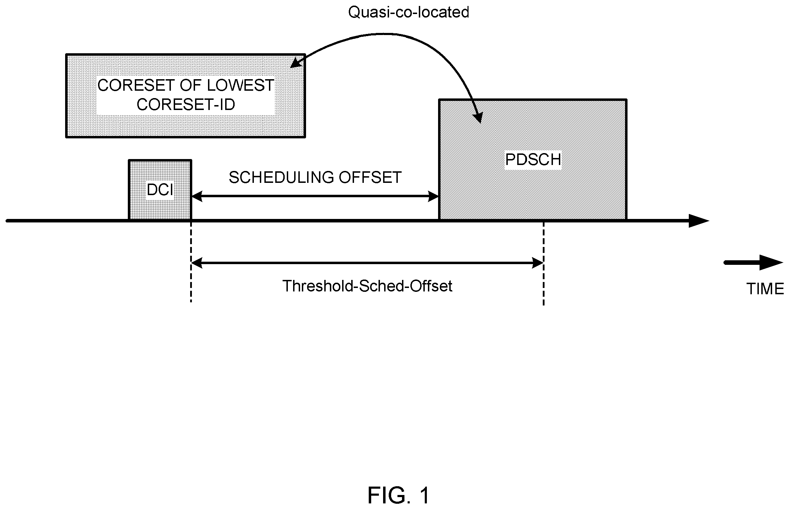

Fig. 1 is a diagram showing an example of the QCL assumption of the DMRS port of PDSCH. In this example, the scheduling offset is smaller than the scheduling offset threshold value. Therefore, the UE may assume that the DMRS ports of the PDSCH are quasi co-located with the RS(s) (e.g., DMRS for PDCCH) in the TCI state for PDCCH corresponding to the lowest CORESET-ID in the latest slot.

### (Multi-panel)

In NR, studies are underway to allow one or more transmission/reception points (TRPs) (multi-TRP) to perform DL transmission (for example, PDSCH transmission) to the UE by using one or more panels (multi-panel).

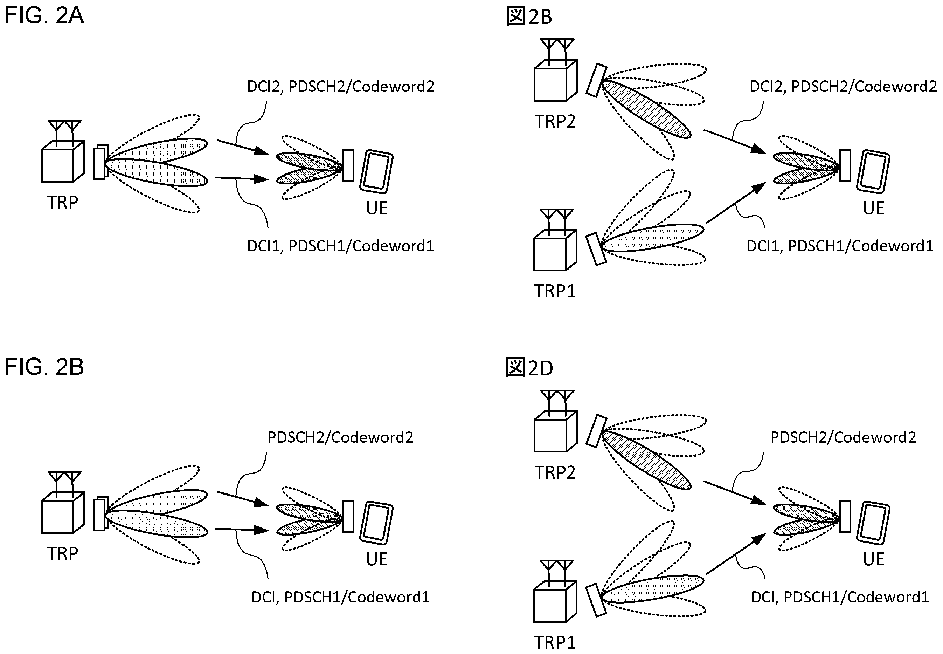

Figs. 2A to 2D are diagrams showing an example of a multi-panel/TRP scenario. Figs. 2A and 2C show an example in which one TRP transmits PDCCH and PDSCH to the UE by using a multi-panel. Figs. 2B and 2D show an example in which two TRPs (TRPs 1 and 2) transmit PDCCH and PDSCH to the UE. In these examples, it is assumed that each TRP is capable of transmitting four different beams, but is not limited to this.

Figs. 2A and 2B correspond to an example in which a plurality of PDCCHs are used for scheduling a plurality of PDSCHs. The UE receives DCI1 and PDSCH1 (codeword1) scheduled by the DCI1, which are transmitted from panel 1 (or TRP1). The UE receives DCI2 and PDSCH2 (codeword2) scheduled by the DCI2, which are transmitted from panel 2 (or TRP2).

Figs. 2C and 2D correspond to an example in which one PDCCH (single PDCCH) is used for scheduling a plurality of PDSCHs. The UE receives one DCI transmitted from either Panel 1 (or TRP1) or Panel 2 (or TRP2). The UE also receives PDSCH1 (codeword1), which is transmitted from panel 1 (or TRP1) and scheduled by the DCI. The UE also receives PDSCH2 (codeword2), which is transmitted from panel 2 (or TRP2) and scheduled by the DCI.

According to such a multi-panel/TRP scenario, more flexible transmission control using a high quality channel is possible.

However, since the multi-panel/TRP is not considered in the NR specifications so far, the QCL assumption when the multi-panel/TRP is used cannot be appropriately controlled.

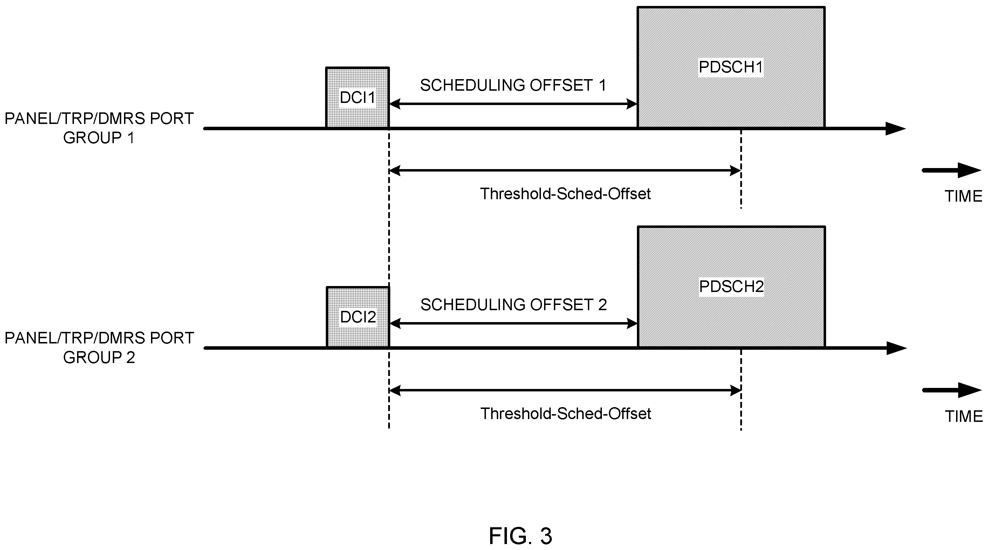

Fig. 3 is a diagram showing problems of QCL assumption of the DMRS ports of PDSCH when multi-panel/TRP is used. This example corresponds to the example of multi-PDCCH shown in Figs. 2A and 2B.

The UE receives DCI1 and PDSCH1 transmitted from panel 1 (or TRP1 or DMRS port group 1). The scheduling offset 1 from the reception of the DCI1 to PDSCH1 is smaller than the scheduling offset threshold value.

The UE also receives DCI2 and PDSCH2 transmitted from panel 2 (or TRP2 or DMRS port group 2). The scheduling offset 2 from the reception of the DCI2 to PDSCH2 is smaller than the scheduling offset threshold value.

In the example of Fig. 3, how to assume the QCL of PDSCH1 and PDSCH2 has not been studied so far. Therefore, if the current NR specifications are followed, spatial diversity gain, high-rank transmission, etc. when using multi-panel/TRP cannot be suitably realized, and an increase in communication throughput may be suppressed.

Therefore, the present inventors have conceived a QCL assumption that can be applied when using a multi-panel/TRP.

Hereinafter, embodiments according to the present disclosure will be described in detail with reference to the drawings. The radio communication method according to each of the embodiments may be applied independently, or may be applied in combination with others.

Note that in the present disclosure, the panel, TRP, DMRS port, DMRS port group, PDSCH, codeword, etc. may be replaced with each other. Further, the panel ID and the panel may be replaced with each other.

### (Radio Communication Method)

### <First Embodiment>

In the first embodiment, when the time offset (scheduling offset) between the reception of DL DCI and the reception of PDSCH corresponding to the DCI is smaller than the scheduling offset threshold value, the UE may assume that the DMRS ports of PDSCH of a serving cell are quasi co-located with the RS in the TCI state with respect to QCL parameters used for QCL indication for PDCCH of the lowest CORESET-ID of a specific associated panel ID in a latest slot in which one or more CORESETs within an active BWP of the serving cell are configured in the UE.

Here, the specific associated panel ID may be, for example, the smallest or largest panel ID in the latest slot in which one or more CORESETs in the active BWP of the serving cell are configured in the UE.

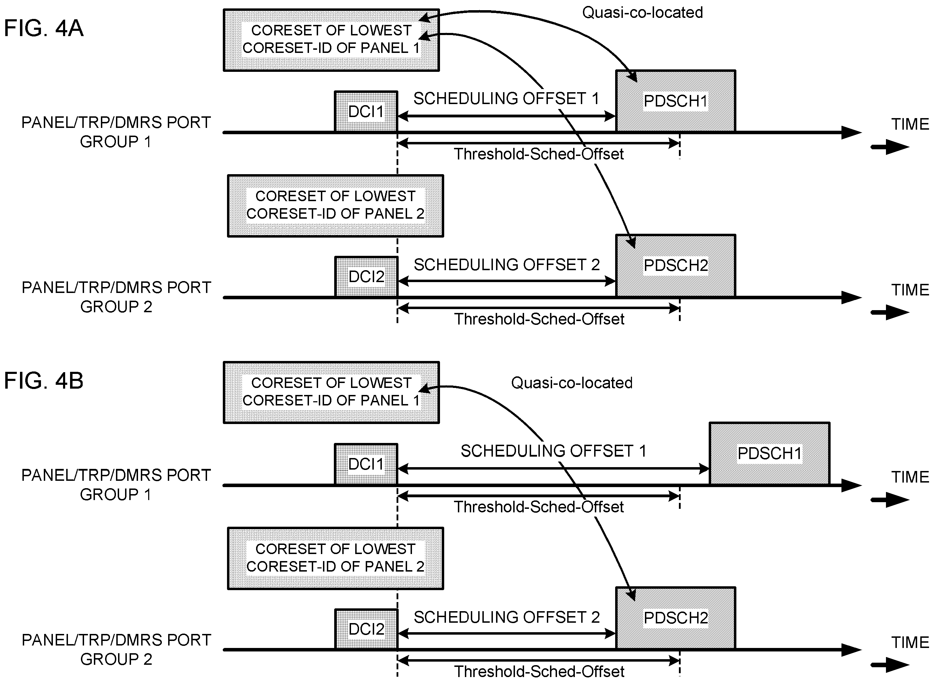

Figs. 4A and 4B are diagrams showing an example of the QCL assumption of the DMRS port of the PDSCH in the first embodiment. The example of Fig. 4A is similar to the example of Fig. 3. The example of Fig. 4B differs from Fig. 4A in that the scheduling offset 1 is equal to or greater than the scheduling offset threshold value. Note that in these examples, the specific associated panel ID is assumed to be panel ID1, but the present invention is not limited to this.

In Fig. 4A, both the scheduling offsets 1 and 2 are smaller than the scheduling offset threshold value. Therefore, the UE may assume that both the PDSCH1 DMRS port and the PDSCH2 DMRS port are quasi co-located with the RS in the TCI state for PDCCH corresponding to the lowest CORESET-ID of panel 1 in the latest slot.

Note that DCI1 may be transmitted by CORESET with the lowest CORESET-ID of panel 1, or may be transmitted by another CORESET (similarly in the drawings below, even when CORESET and DCI are described, the DCI may or may not be included in the CORESET).

In Fig. 4B, the scheduling offset 1 is greater than the scheduling offset threshold value and the scheduling offset 2 is smaller than the scheduling offset threshold value. Therefore, the UE may assume that the DMRS ports of PDSCH1 are quasi co-located with the RS in the TCI state with respect to the QCL type parameter given by the TCI state indicated by DCI1. The UE may assume that the DMRS ports of PDSCH2 are quasi co-located with the RS in the TCI state for PDCCH corresponding to the lowest CORESET-ID of panel 1 in the latest slot.

Note that, as a variation of the first embodiment, when the scheduling offset is smaller than the scheduling offset threshold value, the UE may assume that the DMRS ports of PDSCH of a serving cell are quasi co-located with the RS in the TCI state with respect to the QCL parameters used for the PDCCH that schedules the PDSCH of a specific associated panel ID in the latest slot in which one or more CORESETs within the active BWP of the serving cell are configured in the UE.

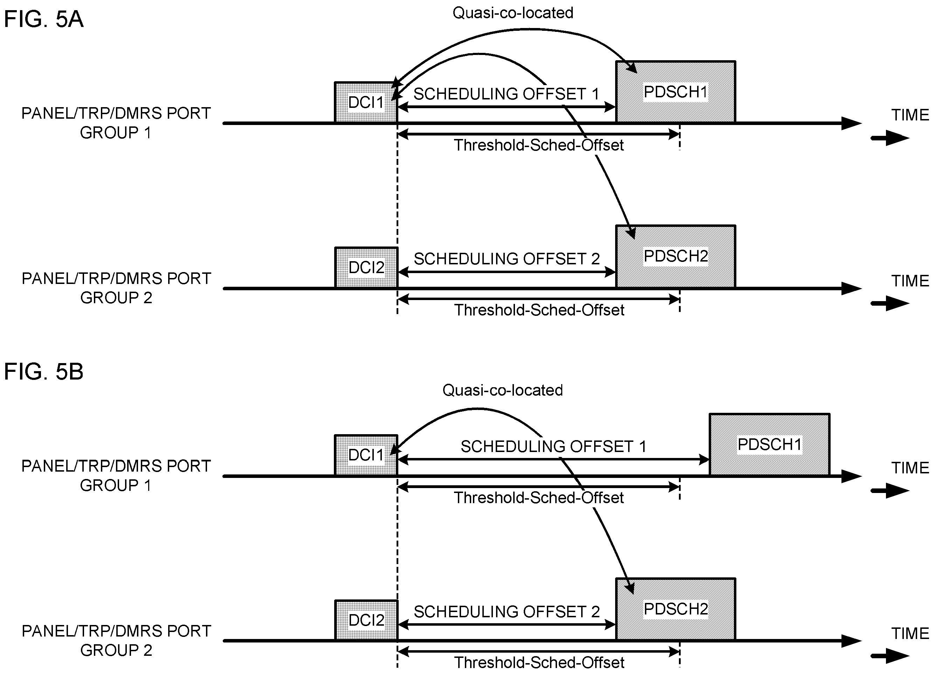

Figs. 5A and 5B are diagrams showing an example of the QCL assumption of the DMRS port of the PDSCH in the variation of the first embodiment. Figs. 5A and 5B are similar to Figs. 4A and 4B, respectively, except for the QCL assumption.

In Fig. 5A, both the scheduling offsets 1 and 2 are smaller than the scheduling offset threshold value. Therefore, the UE may assume that both the PDSCH1 DMRS port and the PDSCH2 DMRS port are quasi co-located with the RS in the TCI state for the PDCCH corresponding to the DCI (that is, DCI1) that schedules PDSCH (that is, PDSCH1) of panel 1 in the latest slot.

In Fig. 5B, the scheduling offset 1 is greater than the scheduling offset threshold value, and the scheduling offset 2 is smaller than the scheduling offset threshold value. Therefore, the UE may assume that the DMRS ports of PDSCH1 are quasi co-located with the RS in the TCI state with respect to the QCL type parameter given by the TCI state indicated by DCI1. The UE may assume that the DMRS ports of PDSCH2 are quasi co-located with the RS in the TCI state for PDCCH corresponding to the DCI (that is, DCI1) that schedules PDSCH of panel 1 (that is, PDSCH1) in the latest slot.

According to the first embodiment described above, the QCL assumption for PDSCH when the scheduling offset is smaller than the scheduling offset threshold value can be determined based on a specific panel. Also, if the scheduling offset is made smaller than the scheduling offset threshold value, the QCL assumptions for a plurality of PDSCHs can be made the same.

### <Second Embodiment>

In the second embodiment, when the time offset (scheduling offset) between the reception of the DL DCI and the reception of the PDSCH corresponding to the DCI is smaller than the scheduling offset threshold value, the UE may assume that the DMRS ports of the PDSCH of a serving cell are quasi co-located with the RS in the TCI state with respect to the QCL parameter used for QCL indication of the PDCCH of the lowest CORESET-ID of a corresponding associated panel ID in the latest slot in which one or more CORESETs within the active BWP of the serving cell are configured in the UE.

Here, the corresponding associated panel ID may be, for example, a panel ID used for transmitting or receiving the PDSCH (or DCI).

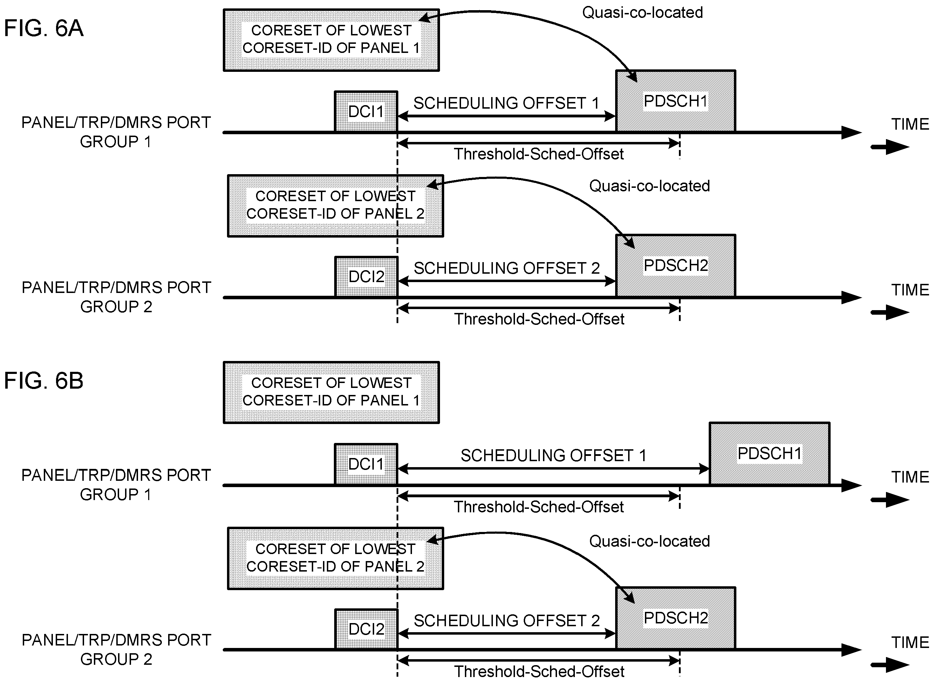

Figs. 6A and 6B are diagrams showing an example of the QCL assumption of the DMRS port of the PDSCH in the second embodiment. Figs. 6A and 6B are similar to Figs. 4A and 4B, respectively, except for the QCL assumption.

In Fig. 6A, both the scheduling offsets 1 and 2 are smaller than the scheduling offset threshold value. Therefore, the UE may assume that the DMRS ports of the PDSCH1 are quasi co-located with the RS in the TCI state for PDCCH corresponding to the lowest CORESET-ID of panel 1 (panel for PDSCH1) in the latest slot. The UE may assume that the DMRS ports of PDSCH2 are quasi co-located with the RS in the TCI state for PDCCH corresponding to the lowest CORESET-ID of panel 2 (panel for PDSCH2) in the latest slot.

In Fig. 6B, the scheduling offset 1 is greater than the scheduling offset threshold value, and the scheduling offset 2 is smaller than the scheduling offset threshold value. Therefore, the UE may assume that the DMRS ports of PDSCH1 are quasi co-located with the RS in the TCI state with respect to the QCL type parameter given by the TCI state indicated by DCI1. The UE may assume that the DMRS ports of PDSCH2 are quasi co-located with the RS in the TCI state for PDCCH corresponding to the lowest CORESET-ID of panel 2 (panel for PDSCH2) in the latest slot.

Note that, as a variation of the second embodiment, it may be assumed that the DMRS ports of PDSCH of a serving cell are quasi co-located with the RS in the TCI state with respect to the QCL parameter used for PDCCH that schedules the PDSCH of the corresponding associated panel ID in the latest slot in which one or more CORESETs within the active BWP of the serving cell are configured in the UE.

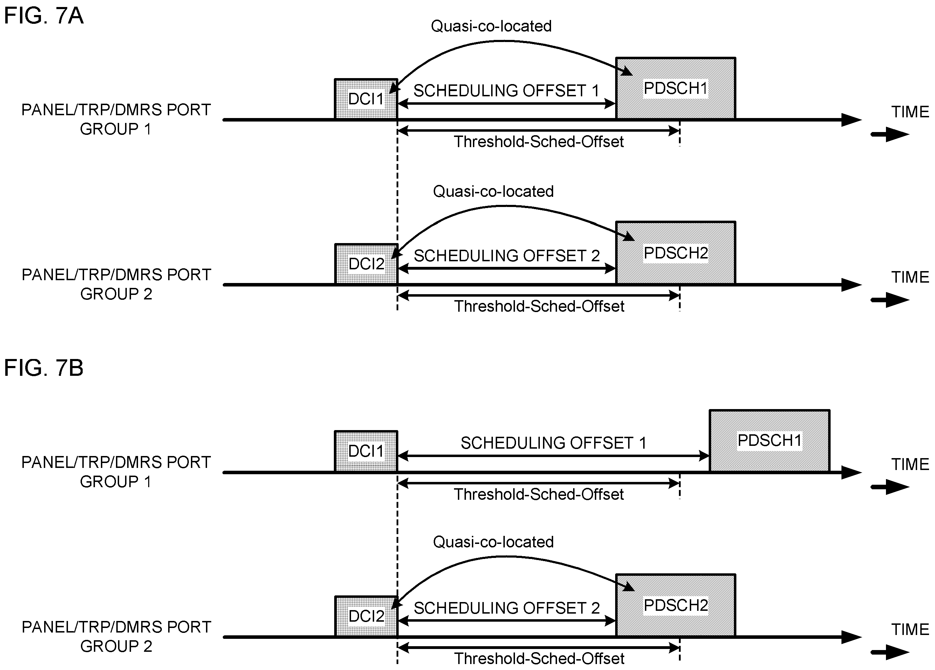

Figs. 7A and 7B are diagrams showing an example of the QCL assumption of the DMRS port of the PDSCH in the variation of the second embodiment. Figs. 7A and 7B are similar to Figs. 4A and 4B, respectively, except for the QCL assumption.

In Fig. 7A, both the scheduling offsets 1 and 2 are smaller than the scheduling offset threshold value. Therefore, the UE may assume that the DMRS ports of PDSCH1 are quasi co-located with the RS in the TCI state for PDCCH corresponding to the DCI (that is, DCI1) that schedules the PDSCH of panel 1 (that is, PDSCH1) in the latest slot. The UE may also assume that the DMRS ports of PDSCH2 are quasi co-located with the RS in the TCI state for PDCCH corresponding to the DCI (that is, DCI2) that schedules the PDSCH of panel 2 (that is, PDSCH2) in the latest slot.

In Fig. 7B, the scheduling offset 1 is greater than the scheduling offset threshold value, and the scheduling offset 2 is smaller than the scheduling offset threshold value. Therefore, the UE may assume that the DMRS ports of PDSCH1 are quasi co-located with the RS in the TCI state with respect to the QCL type parameter given by the TCI state indicated by DCI1. The UE may assume that the DMRS ports of PDSCH2 are quasi co-located with the RS in the TCI state for PDCCH corresponding to the DCI (that is, DCI2) that schedules the PDSCH (that is, PDSCH2) of panel 2 in the latest slot.

According to the second embodiment described above, the QCL assumption for PDSCH when the scheduling offset is smaller than the scheduling offset threshold value can be determined based on the corresponding panel.

### <Other embodiments>

The first embodiment may be applied, for example, when at least one of the following is satisfied:
- When the UE receives a plurality of PDCCHs (DCI) or PDSCHs from one TRP,
- When the UE receives a plurality of PDCCHs (DCI) or PDSCHs from a multi-panel, and
- When the TCI state of DCI between a multi-TRP or a multi-panel is assumed to be QCL type D.

The second embodiment may be applied, for example, when at least one of the following is satisfied:
- When the UE receives a plurality of PDCCHs (DCI) or PDSCHs from a multi-TRP,
- When the UE receives a plurality of PDCCHs (DCI) or PDSCHs from a multi-panel, and
- When the TCI state of DCI between a multi-TRP or a multi-panel is not assumed to be QCL type D.

Note that in these conditions, the TCI state of DCI may be replaced with at least one of the activated TCI state, the smallest TCI state ID, the TCI state of the smallest CORESET ID, and the like.

The QCL assumption determination method shown in the first embodiment and the second embodiment may be used properly depending on the conditions.

Although Figs. 4A to 7B show examples of multi-PDCCH as shown in Figs. 2A and 2B, each embodiment of the present disclosure may be applied to a single PDCCH as shown in Figs. 2C and 2D.

For example, in Fig. 4A, if DCI1 does not exist and DCI2 schedules PDSCH1 and PDSCH2, the UE may assume that both PDSCH1 DMRS port and PDSCH2 DMRS port are quasi co-located with the RS in the TCI state for PDCCH corresponding to the lowest CORESET-ID of panel 1 in the latest slot.

Note that, in each embodiment of the present disclosure, examples are shown in which the reception timings of DCI1 and DCI2 are the same, but the present invention is not limited to this. Each embodiment of the present disclosure is also applicable when the DCI reception timing of each panel is different.

Note that the scheduling offsets 1 and 2 shown in the respective embodiments of the present disclosure may be equal or different.

Further, although examples are shown in which the scheduling offset threshold value shown in each embodiment of the present disclosure is common regardless of the panel, it may be different for each panel.

The CORESET-ID indexing method (indexing) may be common (global) to all panels (or TRPs or DMRS port groups) or independent to each panel (or TRP or DMRS port group).

For example, consider an example in which CORESET-ID = 1 and 2 correspond to DMRS port group 1 and CORESET-ID = 3 and 4 correspond to DMRS port group 2. In this case, the lowest CORESET-ID is one. Also, the lowest CORESET-ID for the smallest DMRS port group is one. Also, the lowest CORESET-ID for DMRS port group 1 is one. Also, the lowest CORESET-ID for DMRS port group 2 is three.

Note that the DMRS port group may be associated with each CORESET (for example, the RRC information element "ControlResourceSet" may include the DMRS port group information). The DMRS port group configuration information may include the corresponding CORESET information. For example, information indicating that DMRS port group 1 corresponds to CORESET-ID = 1 and 2 may be configured by the DMRS port group configuration information.

The DMRS port group of the present disclosure may include at least one of the DMRS port group of PDSCH, the DMRS port group of PDCCH, the DMRS port group of PBCH, and the DMRS port group of other channels.

The lowest CORESET-ID of the present disclosure may be replaced with a specific defined CORESET-ID.

### (Radio Communication System)

A configuration of a radio communication system according to one embodiment of the present disclosure is hereinafter described. In this radio communication system, communication is performed using one or a combination of the radio communication methods according to the embodiment of the present disclosure.

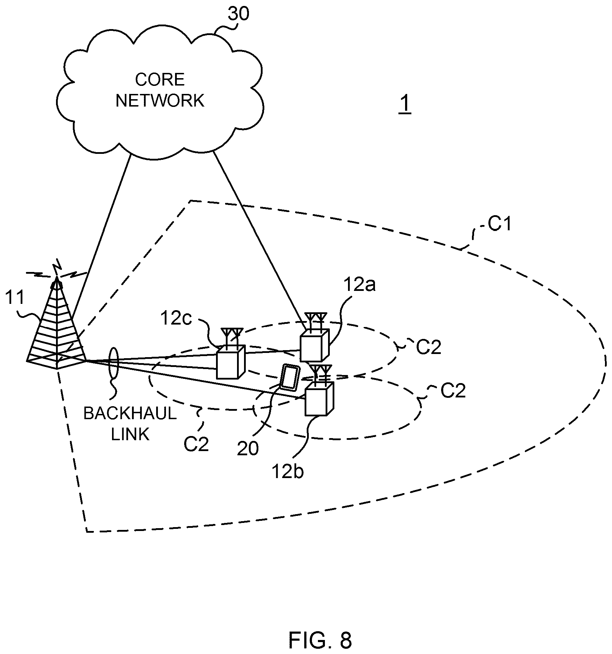

Fig. 8 is a diagram illustrating an example of a schematic configuration of a radio communication system according to an embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of RATs (Radio Access Technology). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation and dual connectivity (DC) using a plurality of component carriers (CC).

Each CC may be included in at least one of a frequency range 1 (FR1) and a frequency range 2 (FR2). The macro cell C1 may be included in FR1, and a small cell C2 may be included in FR2. For example, FR1 may be a frequency range of 6 GHz and less (sub-6 GHz), and FR2 may be a frequency range higher than 24 GHz (above-24 GHz). Note that, the frequency ranges, definitions, and the like of FR1 and FR2 are not limited to these, and for example, FR1 may be a frequency range higher than FR2.

In addition, the user terminal 20 may perform communication in each CC using at least one of time division duplex (TDD) and frequency division duplex (FDD).

The plurality of base stations 10 may be connected by wire (e.g., an optical fiber or an X2 interface in compliance with common public radio interface (CPRI)) or by radio (e.g., NR communication). For example, when NR communication is used as a backhaul between the base stations 11 and 12, the base station 11 corresponding to a higher station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication schemes such as LTE, LTE-A, and 5G.

In the radio communication system 1, a radio access scheme based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access scheme may be referred to as a waveform. Note that in the radio communication system 1, another radio access scheme (for example, another single carrier communication scheme or another multi-carrier communication scheme) may be used as the UL and DL radio access scheme.

In the radio communication system 1, as a downlink channel, a physical downlink shared channel (PDSCH) shared by the user terminals 20, a physical broadcast channel (PBCH), a physical downlink control channel (PDCCH), or the like may be used.

In the radio communication system 1, as an uplink channel, a physical uplink shared channel (PUSCH) shared by the user terminals 20, a physical uplink control channel (PUCCH), a physical random access channel (PRACH), or the like may be used.

User data, higher layer control information, SIB (System Information Block), and the like are communicated by the PDSCH. User data, higher layer control information, and the like may be communicated by the PUSCH. Further, master information block (MIB) may be communicated by the PBCH.

Lower layer control information may be communicated by the PDCCH. The lower layer control information may include, for example, downlink control information (DCI) including scheduling information of at least one of PDSCH and PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

A control resource set (CORESET) and a search space may be used to detect PDCCH. The CORESET corresponds to a resource that searches for DCI. The search space corresponds to a search area and a search method for PDCCH candidates. One CORESET may be associated with one or more search spaces. The UE may monitor CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Channel state information (CSI), delivery acknowledgment information (for example, hybrid automatic repeat request acknowledgement (HARQ-ACK), which may be referred to as ACK/NACK or the like), scheduling request (SR), and the like may be communicated by the PUCCH. A random access preamble for establishing a connection with a cell may be communicated by the PRACH,

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be communicated. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be communicated as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that SS, SSB, or the like may also be referred to as a reference signal.

Further, in the radio communication system 1, a sounding reference signal (SRS), a demodulation reference signal (DMRS), and the like may be communicated as an uplink reference signal (UL-RS). Note that, DMRS may be referred to as a "user terminal-specific reference signal (UE-specific Reference Signal)."

### (Base Station)

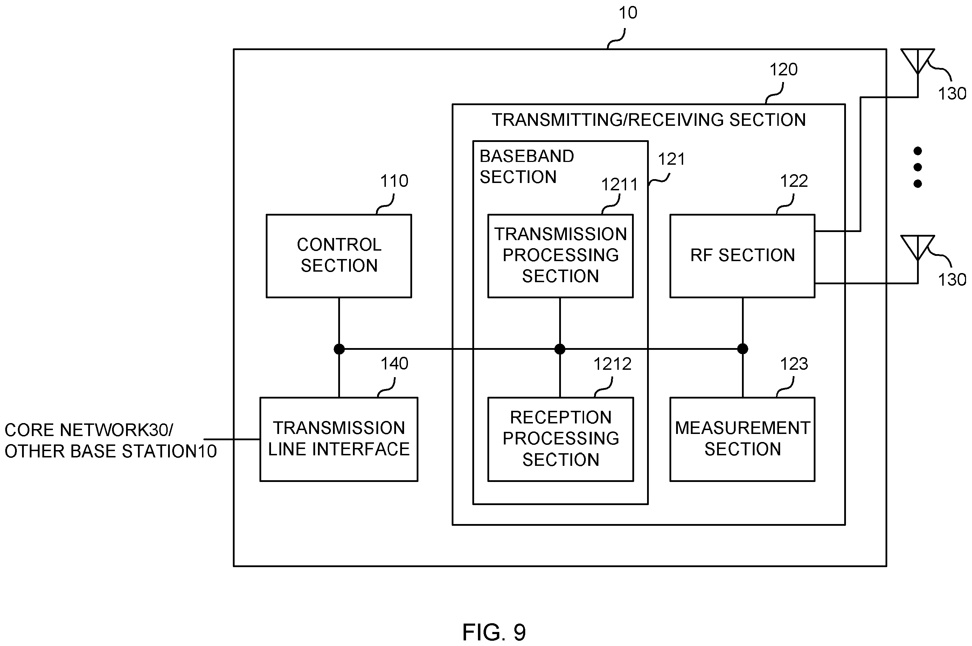

Fig. 9 is a diagram illustrating an example of a configuration of a base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (e.g., resource allocation or mapping), and the like. The control section 110 may control transmission/reception, measurement, and the like using the transmitting/receiving section 120, the transmission/reception antenna 130, and the transmission line interface 140. The control section 110 may generate and transfer data to be transmitted as a signal, control information, a sequence, and the like to the transmitting/receiving section 120. The control section 110 may perform call processing (such as configuration or releasing) of a communication channel, management of the state of the base station 10, management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (e.g., precoding), analog beam forming (e.g., phase rotation), and the like.

The transmitting/receiving section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on a bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may perform measurement on the received power (e.g., reference signal received power (RSRP)), received quality (e.g., reference signal received quality (RSRQ), signal to interference plus noise ratio (SINR), signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may perform acquisition, transmission, and the like of user data (user plane data), control plane data, and the like for the user terminal 20.

Note that, the transmitting section and the receiving section of the base station 10 in the present disclosure may be constituted by at least one of the transmitting/receiving section 120, the transmission/reception antenna 130, and the transmission line interface 140.

Note that the transmitting/receiving section 120 may transmit a plurality of PDSCHs to the user terminal 20 by using a plurality of panels. Further, the transmitting/receiving sections 120 of the plurality of base stations 10 may transmit a plurality of PDSCHs to the user terminal 20.

When the time offset between the reception of the corresponding downlink control information (DCI) and the reception of the PDSCH is smaller than a certain threshold value for each PDSCH, the control section 110 may perform transmission processing so that the DMRS ports of the PDSCH of a serving cell are quasi co-located with the reference signal in the TCI state with respect to the QCL parameter used for the QCL indication for PDCCH of the lowest CORESET-ID of a certain panel ID in the latest slot in which one or more CORESETs within the active BWP of the serving cell are configured in the user terminal 20.

Note that, the certain panel ID may be the minimum or maximum panel ID. The certain panel ID may be a corresponding associated panel ID (e.g., panel ID of the base station 10 used for PDSCH).

The PDCCH of the lowest CORESET-ID mentioned above may be the PDCCH that schedules the PDSCH (or may be limited). Also, the QCL parameter used for the QCL indication for PDCCH of the lowest CORESET-ID described above may be replaced with the QCL parameter used for the PDCCH that schedules the PDSCH.

### (User Terminal)

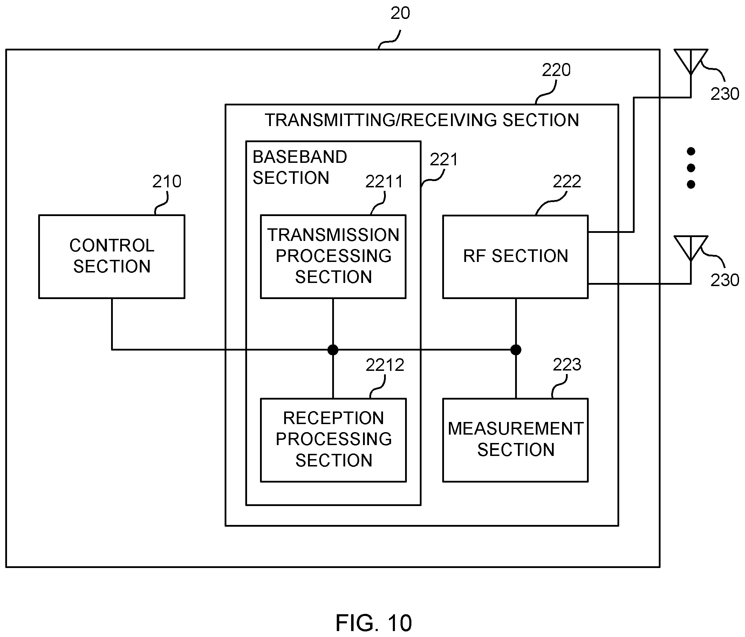

Fig. 10 is a diagram illustrating an example of a configuration of a user terminal according to an embodiment. The user terminal 20 includes a control section 210, a transmitting/receiving section 220, and a transmission/reception antenna 230. Note that, one or more of the control sections 210, one or more of the transmitting/receiving sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate and transfer data to be transmitted as a signal, control information, a sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 220 may be constituted as an integrated transmitting/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna described based on common recognition in the technical field to which the present disclosure relates, for example, an array antenna, and the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming **(e.g.,** precoding), analog beam forming **(e.g.,** phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on a bit string to be transmitted, and may output a baseband signal.

Note that, whether or not to apply DFT processing may be determined based on configuration of transform precoding. When transform precoding is enabled for a channel (e.g., PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may perform measurement on the received power (e.g., RSRP), received quality (e.g., RSRQ, SINR, or SNR), signal strength (e.g., RSSI), propagation path information (e.g., CSI), and the like. The measurement result may be output to the control section 210.

Note that, the transmitting section and the receiving section of the user terminal 20 in the present disclosure may be constituted by at least one of the transmitting/receiving section 220, the transmission/reception antenna 230, and the transmission line interface 240.

Note that the transmitting/receiving section 220 may receive a plurality of PDSCHs. The plurality of PDSCHs may be transmitted from different TRPs (separate base stations 10), or may be transmitted from different panels.

When the time offset between the reception of the corresponding downlink control information (DCI) and the reception of the PDSCH is smaller than a certain threshold value for each PDSCH, the control section 210 may assume that the DMRS ports of the PDSCH of a serving cell are quasi co-located with the reference signal in the TCI state with respect to the QCL parameter used for the QCL indication for PDCCH of the lowest CORESET-ID of a certain panel ID in the latest slot in which one or more CORESETs within the active BWP of the serving cell are configured in the user terminal 20. The control section 210 may perform PDSCH reception processing based on the assumption.

Note that, the certain panel ID may be the minimum or maximum panel ID. The certain panel ID may be a corresponding associated panel ID (e.g., panel ID of the base station 10 used for PDSCH). When the certain panel ID is the corresponding associated panel ID, it may be assumed that the plurality of PDSCHs are transmitted from different TRPs.

The PDCCH of the lowest CORESET-ID mentioned above may be the PDCCH that schedules the PDSCH (or may be limited). Also, the QCL parameter used for the QCL indication for PDCCH of the lowest CORESET-ID described above may be replaced with the QCL parameter used for the PDCCH that schedules the PDSCH.

### (Hardware Configuration)

Note that, the block diagrams used to describe the above embodiments illustrate blocks in functional units. These functional blocks (configuration units) may be implemented in arbitrary combinations of at least one of hardware or software. Also, the method for implementing each functional block is not particularly limited. That is, each functional block may be implemented by a single device physically or logically aggregated, or may be implemented by directly or indirectly connecting two or more physically or logically separate devices (using wires, radio, or the like, for example) and using these plural devices. The functional block may be implemented by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called as a transmitting unit, a transmitter, or the like. In any case, as described above, the implementation method is not particularly limited.

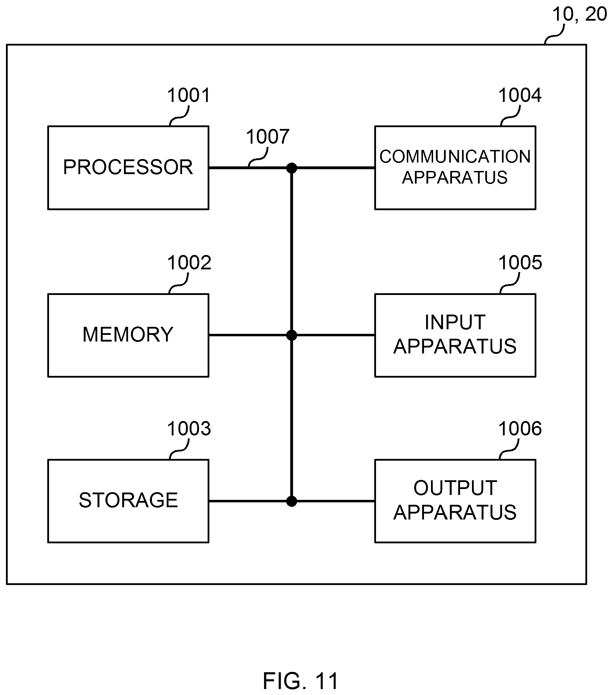

For example, the base station, the user terminal, and so on according to one embodiment of the present disclosure may function as a computer that executes the processing of the radio communication method of the present disclosure. Fig. 11 is a diagram showing an example of a hardware configuration of the base station and the user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Furthermore, processings may be implemented with one processor, or processings may be implemented in parallel, in sequence, or in different manners, on two or more processors. Note that the processor 1001 may be implemented with one or more chips.

Each function of the base station 10 and the user terminal 20 is implemented by, for example, reading certain software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be constituted by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 and the communication apparatus 1004 into the memory 1002, and executes various processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (CD-ROM (Compact Disc ROM) and so on), a digital versatile disc, a Blu-ray (registered trademark) disk), a removable disk, a hard disk drive, a smart card, a flash memory device (e.g., a card, a stick, a key drive), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into a transmitting section 120a (220a) and a receiving section 120b (220b).

The input apparatus 1005 is an input device for receiving input from the outside (for example, a keyboard, a mouse, a microphone, a switch, a button, a sensor, and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. In addition, the signal may be a message. A reference signal can be abbreviated as an "RS", and may be referred to as a "pilot", a "pilot signal" and so on, depending on which standard applies. Furthermore, a "component carrier (CC)" may be referred to as a "cell," a "frequency carrier," a "carrier frequency" and so on.

A radio frame may be formed with one or more periods (frames) in the time domain. Each of the one or more periods (frames) constituting a radio frame may be referred to as a "subframe". Furthermore, a subframe may be formed with one or multiple slots in the time domain. A subframe may be a fixed time duration (e.g., 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like). Also, a slot may be a time unit based on numerology.

A slot may include a plurality of mini slots. Each mini slot may be formed with one or more symbols in the time domain. Also, a mini slot may be referred to as a "subslot". Each mini slot may be formed with fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot", and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

TTI having a time duration of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a usual TTI, a subframe, etc.) may be replaced with a TTI having a time duration exceeding 1 ms, and a short TTI (for example, a shortened TTI, etc.) may be replaced with a TTI having a TTI duration smaller than the TTI duration of a long TTI and not smaller than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like each may be formed with one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a certain signal/channel outside the active BWP. Note that "cell", "carrier", and the like in the present disclosure may be replaced with "BWP".

Note that the structures of radio frames, subframes, slots, mini slots, symbols, and so on described above are merely examples. For example, configurations pertaining to the number of subframes included in a radio frame, the number of slots per a subframe or a radio frame, the number of mini slots included in a slot, the number of symbols and RBs included in a slot or a mini slot, the number of subcarriers included in an RB, the number of symbols in a TTI, the symbol duration, the length of cyclic prefixes (CPs) and so on can be variously changed.

Furthermore, the information and parameters described in the present disclosure may be represented in absolute values, represented in relative values with respect to given values, or represented using other corresponding information. For example, a radio resource may be specified by a certain index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers and/or from lower layers to higher layers. Information, signals and so on may be input and output via a plurality of network nodes.

The information, signals and so on that are input and/or output may be stored in a specific location (e.g., in a memory), or may be managed in a control table. The information, signals and so on to be input and/or output can be overwritten, updated or appended. The information, signals and so on that are output may be deleted. The information, signals and so on that are input may be transmitted to other pieces of apparatus.

The reporting of information is by no means limited to the aspects/embodiments described in the present disclosure, and may be performed using other methods. For example, notification of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)," "L1 control information (L1 control signal)" and so on. Furthermore, the RRC signaling may be referred to as an RRC message, and may be, for example, an RRC connection setup message, an RRC connection reconfiguration message, and the like. Also, MAC signaling may be reported using, for example, MAC control elements (MAC CEs (Control Elements)).

Also, reporting of certain information (for example, reporting of information to the effect that "X holds") does not necessarily have to be sent explicitly, and may be sent implicitly (for example, by not reporting this piece of information, or by reporting another piece of information).

Decisions may be made in values represented by one bit (0 or 1), may be made in Boolean values that represent true or false, or may be made by comparing numerical values (for example, comparison against a certain value).

Software, whether referred to as "software," "firmware, " "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably. The "network" may mean an apparatus (e.g., a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be referred to as a term such as a macro cell, a small cell, a femto cell, a pico cell, and the like.

A base station can accommodate one or more (e.g., three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station and mobile station may be a device mounted on a moving body, a moving body itself, and the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processings, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented specific order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judging (determining)" as used in the present disclosure may encompass a wide variety of actions. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (e.g., receiving information), transmitting (e.g., transmitting information), input, output, accessing (e.g., accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) domains, or the like.

In the present disclosure, the phrase "A and B are different" may mean "A and B are different from each other". Note that the term may mean that "A and B are respectively different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

The scope of the invention is limited by the appended claims.

## Claims

1. A terminal (20) comprising:
a receiving section (220) adapted to receive a Physical Downlink Shared Channel, PDSCH, in a serving cell; and
a control section (210) adapted to, when a time offset between reception of downlink control information corresponding to the PDSCH and reception of the PDSCH is less than a threshold, assume that a demodulation reference signal, DMRS, port of the PDSCH is quasi co-located, QCLed, with a certain reference signal,
wherein the certain reference signal is associated with a quasi-co-location, QCL, parameter used for QCL indication for a Physical Downlink Control Channel, PDCCH, corresponding to a lowest control resource set, CORESET,-ID of an index of Transmission/Reception Point, TRP, in a latest slot,
wherein the latest slot is a latest slot in which one or more CORESETs associated with the index of TRP are monitored, by the terminal, within an active bandwidth part, BWP, of the serving cell, and
wherein the index of TRP is used for reception of the downlink control information.

2. The terminal (20) according to claim 1, wherein the PDCCH corresponding to the lowest CORESET-ID schedules the PDSCH.

3. A radio communication method for a terminal, comprising:
receiving a Physical Downlink Shared Channel, PDSCH, in a serving cell; and
when a time offset between reception of downlink control information corresponding to the PDSCH and reception of the PDSCH is less than a threshold, assuming that a demodulation reference signal, DMRS, port of PDSCH is quasi co-located, QCLed, with a certain reference signal,
wherein the certain reference signal is associated with a quasi-co-location, QCL, parameter used for QCL indication for a Physical Downlink Control Channel, PDCCH, corresponding to a lowest control resource set, CORESET,-ID of an index of Transmission/Reception Point, TRP, in a latest slot,
wherein the latest slot is a latest slot in which one or more CORESETs associated with the index of TRP are monitored, by a terminal, within an active bandwidth part, BWP, of the serving cell, and
wherein the index of TRP is used for reception of the downlink control information.

4. A system (1) comprising a base station (10) and a terminal (20), wherein
the base station (10) comprises:
a transmitting section (120) adapted to transmit a physical downlink shared channel PDSCH, and
the terminal comprises:
a receiving section (120) adapted to receive the PDSCH in a serving cell; and
a control section (110) adapted to, when a time offset between reception of downlink control information corresponding to the PDSCH and reception of the PDSCH is less than a threshold, assume that a demodulation reference signal DMRS port of the PDSCH is quasi-co-located, QCLed, with a certain reference signal,
wherein the certain reference signal is associated with a quasi-co-location, QCL, parameter used for QCL indication for a physical downlink control channel, PDCCH, corresponding to a lowest control resource set, CORESET,-ID of an index of Transmission/Reception Point, TRP, in a latest slot,
wherein the latest slot is a latest slot in which one or more CORESETs associated with the index of TRP are monitored, by the terminal, within an active bandwidth part, BWP, of the serving cell, and
wherein the index of TRP is used for reception of the downlink control information.

## Patentansprüche

1. Endgerät (20), umfassend:
einen Empfangsabschnitt (220), der für den Empfang eines physikalischen gemeinsam genutzten Downlink-Kanals, PDSCH, in einer bedienenden Zelle angepasst ist; und
ein Steuerabschnitt (210), der dazu angepasst ist, dass er, wenn eine zeitliche Verschiebung zwischen dem Empfang von Downlink-Steuerinformationen, die dem PDSCH entsprechen, und dem Empfang des PDSCH kleiner als ein Schwellenwert ist, annimmt, dass ein Demodulationsreferenzsignal-, DMRS-, Port des PDSCH mit einem bestimmten Referenzsignal quasi-kolokalisiert, QCLiert, wird,
wobei das bestimmte Referenzsignal einem Quasi-Kolokations-, QCL-, Parameter zugeordnet ist, der für die QCL-Angabe für einen physikalischen Downlink-Steuerkanal, PDCCH, verwendet wird, der einer niedrigsten Steuerressourcensatz-, CORESET-, ID eines Index eines Sende-/Empfangspunkts, TRP, in einem neuesten Slot entspricht,
wobei der neueste Slot ein neuester Slot ist, in dem ein oder mehrere CORESETs, die dem Index von TRP zugeordnet sind, von dem Endgerät innerhalb eines Teilbereichs der aktiven Bandbreite, BWP, der bedienenden Zelle überwacht werden, und
wobei der Index von TRP für den Empfang der Downlink-Steuerinformationen verwendet wird.

2. Endgerät (20) nach Anspruch 1, wobei der PDCCH, der der niedrigsten CORESET-ID entspricht, den PDSCH plant.

3. Funkkommunikationsverfahren für ein Endgerät, umfassend:
Empfangen eines physikalischen gemeinsam genutzten Downlink-Kanals, PDSCH, in einer bedienenden Zelle; und
wenn eine zeitliche Verschiebung zwischen dem Empfang von Downlink-Steuerinformationen, die dem PDSCH entsprechen, und dem Empfang des PDSCH weniger als ein Schwellenwert ist, Annehmen, dass ein Demodulationsreferenzsignal-, DMRS-, Port des PDSCH mit einem bestimmten Referenzsignal quasi-kolokalisiert, QCLiert, wird,
wobei das bestimmte Referenzsignal einem Quasi-Kolokations-, QCL-, Parameter zugeordnet ist, der für die QCL-Angabe für einen physikalischen Downlink-Steuerkanal, PDCCH, verwendet wird, der einer niedrigsten Steuerressourcensatz-, CORESET-, ID eines Index eines Sende-/Empfangspunkts, TRP, in einem neuesten Slot entspricht,
wobei der neueste Slot ein neuester Slot ist, in dem ein oder mehrere CORESETs, die dem Index von TRP zugeordnet sind, von einem Endgerät innerhalb eines Teilbereichs der aktiven Bandbreite, BWP, der bedienenden Zelle überwacht werden, und
wobei der Index von TRP für den Empfang der Downlink-Steuerinformationen verwendet wird.

4. System (1), umfassend eine Basisstation (10) und ein Endgerät (20), wobei die Basisstation (10) Folgendes umfasst:
einen Sendeabschnitt (120), der dazu angepasst ist, einen physikalischen gemeinsam genutzten Downlink-Kanal, PDSCH, zu senden, und das Endgerät umfasst:
einen Empfangsabschnitt (120), der für den Empfang des PDSCH in einer bedienenden Zelle angepasst ist; und
einen Steuerabschnitt (110), der so angepasst ist, dass er, wenn eine zeitliche Verschiebung zwischen dem Empfang von Downlink-Steuerinformationen, die dem PDSCH entsprechen, und dem Empfang des PDSCH kleiner als ein Schwellenwert ist, annimmt, dass ein Demodulationsreferenzsignal-, DMRS-, Port des PDSCH mit einem bestimmten Referenzsignal quasi-kolokalisiert, QCLiert, wird,
wobei das bestimmte Referenzsignal einem Quasi-Kolokations-, QCL-, Parameter zugeordnet ist, der für die QCL-Angabe für einen physikalischen Downlink-Steuerkanal, PDCCH, verwendet wird, der einer niedrigsten Steuerressourcensatz-, CORESET-, ID eines Index des Sende-/Empfangspunkts, TRP, in einem neuesten Slot entspricht,
wobei der neueste Slot ein neuester Slot ist, in dem ein oder mehrere CORESETs, die dem Index von TRP zugeordnet sind, von dem Endgerät innerhalb eines Teilbereichs der aktiven Bandbreite, BWP, der bedienenden Zelle überwacht werden, und
wobei der Index von TRP für den Empfang der Downlink-Steuerinformationen verwendet wird.

## Revendications

1. Terminal (20) comprenant :
une section (220) de réception adaptée pour recevoir un canal physique partagé de liaison descendante, PDSCH, dans une cellule de desserte ; et
une section (210) de commande adaptée pour, lorsqu'un décalage temporel entre une réception d'une information de commande de liaison descendante correspondant au PDSCH et une réception du PDSCH est inférieur à un seuil, supposer qu'un port de signal de référence de démodulation, DMRS, du PDSCH est quasi colocalisé, QCLed, avec un certain signal de référence,
dans lequel le certain signal de référence est associé à un paramètre de quasi colocalisation, QCL, utilisé pour une indication QCL pour un canal physique de contrôle de liaison descendante, PDCCH, correspondant à un ensemble de ressources de contrôle, ID CORESET, le plus bas d'un indice de point d'émission/réception, TRP, dans un dernier créneau,
dans lequel le dernier créneau est un dernier créneau dans lequel un ou plusieurs CORESET associés à l'indice de TRP sont surveillés, par le terminal, à l'intérieur d'une partie de bande passante, BWP, active de la cellule de desserte, et
dans lequel l'indice de TRP est utilisé pour la réception de l'information de commande de liaison descendante.

2. Terminal (20) selon la revendication 1, dans lequel le PDCCH correspondant à l'ID CORESET le plus bas planifie le PDSCH.

3. Procédé de communication radio pour un terminal, comprenant :
une réception d'un canal physique partagé de liaison descendante, PDSCH, dans une cellule de desserte ; et
lorsqu'un décalage temporel entre une réception d'une information de commande de liaison descendante correspondant au PDSCH et une réception du PDSCH est inférieur à un seuil, le fait de supposer qu'un port de signal de référence de démodulation, DMRS, de PDSCH est quasi colocalisé, QCLed, avec un certain signal de référence,
dans lequel le certain signal de référence est associé à un paramètre de quasi-colocalisation, QCL, utilisé pour une indication QCL pour un canal physique de contrôle de liaison descendante, PDCCH, correspondant à un ensemble de ressources de contrôle, ID CORESET, le plus bas d'un indice de point d'émission/réception, TRP, dans un dernier créneau,
dans lequel le dernier créneau est un dernier créneau dans lequel un ou plusieurs CORESET associés à l'indice de TRP sont surveillés, par un terminal, à l'intérieur d'une partie de bande passante, BWP, active de la cellule de desserte, et
dans lequel l'indice de TRP est utilisé pour la réception de l'information de commande de liaison descendante.

4. Système (1) comprenant une station (10) de base et un terminal (20), dans lequel la station (10) de base comprend :
une section (120) de transmission adaptée pour transmettre un canal physique partagé de liaison descendante, PDSCH, et le terminal comprend :
une section (120) de réception adaptée pour recevoir le PDSCH dans une cellule de desserte ; et
une section (110) de commande adaptée pour, lorsqu'un décalage temporel entre une réception d'une information de commande de liaison descendante correspondant au PDSCH et une réception du PDSCH est inférieur à un seuil, supposer qu'un port de signal de référence de démodulation, DMRS, du PDSCH est quasi colocalisé, QCLed, avec un certain signal de référence,
dans lequel le certain signal de référence est associé à un paramètre de quasi-colocalisation, QCL, utilisé pour une indication QCL pour un canal physique de contrôle de liaison descendante, PDCCH, correspondant à un ensemble de ressources de contrôle, ID CORESET, le plus bas d'un indice de point d'émission/réception, TRP, dans un dernier créneau,
dans lequel le dernier créneau est un dernier créneau dans lequel un ou plusieurs CORESET associés à l'indice de TRP sont surveillés, par le terminal, à l'intérieur d'une partie de bande passante, BWP, active de la cellule de desserte, et
dans lequel l'indice de TRP est utilisé pour la réception de l'information de commande de liaison descendante.
